# EUROPEAN PATENT APPLICATION

(11) **EP 3 445 004 A1**
(43) Date of publication of application: **20.02.2019**
(21) Application number: 18188452.9
(22) Date of filing: 10.08.2018
(51) Int. Cl.: H04L 12/46, H04L 29/06

(54) **REMOTE NETWORK CONNECTION SYSTEM, ACCESS EQUIPMENT AND CONNECTION METHOD THEREOF**

(30) Priority: 15.08.2017 TW 10627667
(71) Applicant: Arcadyan Technology Corporation, 300 Hsinchu (TW)
(72) Inventor: CHEN, Yu-Guo, 300 Hsinchu (TW)
(74) Representative: Patentanwaltskanzlei WILHELM & BECK

(57) **Abstract**

A remote network connection system, comprising: a gateway (20) connected in an enterprise network (2) and connected to an internet (3); a mobile office access equipment (1) connected to the gateway (20) through the internet (3); a terminal equipment (5) connected to the internet (3) through the mobile office access equipment (1); and a breakout unit (13) arranged in the mobile office access equipment (1), and alternatively forming a public connection (31) to obtain an internet service directly through the internet (3), or forming a tunnel connection (4) with the gateway (20) based on a purpose with which a packet is generated.

## Description

This application claims the benefit of Taiwan's Patent Application No. 106127667, filed on August 15, 2017, at Taiwan's Intellectual Property Office, the disclosures of which are incorporated herein in their entirety by reference.

Embodiments in the present disclosure are related to a network connection system and a connection method thereof, and more particularly to a remote network connection system and a connection method thereof.

In the prior art, there are two major technologies for supporting a business trip or using resources of an enterprise's computer for an employee working at home. One technology is using a VPN (virtual private network), and another technology is using a remote desktop technology. As for the VPN, it is necessary to buy expensive equipment, set up the terminal equipment in a remote side and install software to cause the VPN to cooperate with the terminal equipment. For example, a laptop or a smart phone carried by the employee needs to be installed and set up step by step; and it is complex and troublesome to prepare those installations and setups in advance. As for the remote desktop technology, such as Citrix®, Chrome®, or Teamviewer® technology, the software deployment cost is expensive, the installations and settings of the software and the hardware for each user's terminal equipment are also time-consuming and complex to set up. In addition, the operation of connecting to the internet is complicated, the security level is not high, thus it still has drawbacks. Furthermore, in the above prior art, especially for VPN, if the user of the terminal equipment not only uses the internal enterprise network, the operation of the network connection has also to be performed outside the internal enterprise network. Thus, all the packets related to the network connection first enter into the VPN channel, and then these packets are divided into different network streams according to characteristics of the packets, thereby resulting in increasing the channel traffic and decreasing the network speed; and it is also a drawback in the prior art.

Therefore, the inventor in view of the drawbacks in the prior art, has thought of an idea to improve upon the prior art, simplify the preparation tasks, and greatly reduce the establishment cost of the software and hardware, by inventing the present application "remote network connection system, access equipment and connection method thereof", so as to improve the drawbacks in the above prior art.

The purpose of the present application is to provide an equipment, system and method of a novel remote network connection. By the present invention, an access point in an internal wireless network in an enterprise, organization or company can be extended to the remote terminal, i.e., establishing a virtual internal network outside the physical internal network of the enterprises, namely, this virtual network is an extension of the internal enterprise network. By using a hardware unit having an enterprise WiFi communication protocol (such as CAPWAP, LWAPP), one network interface of the hardware unit can establish a tunnel connection with the enterprise. The tunnel connection indicates that a packet carried with a private network address is encapsulated into a loading part of a public connection packet to pass a public network (such as the internet) by using a tunneling protocol. Another network interface of the hardware unit is connected with one or more terminal equipments, and thus achieves the aforementioned efficacies, i.e., the terminal equipment considers the hardware unit as the access point in the internal wireless network in the enterprise, hardware and software configuration rules in each terminal equipment are the same as those used inside the enterprise, it does not need any additional setup, and the only thing that done is a setup of the hardware unit. In the disclosure in the present invention, it will quickly turn these access points into virtual internal enterprise network hot spots after installing software or configuring the access points, such as with a MiFi® device, a WiFi repeater or a smart phone. It can be seen that the system disclosed in the present invention is used to reduce the costs of establishing a remote office or a mobile office, and only a few settings on an access equipment are required, and then the access equipment can provide multiple terminal equipments with the internet service. In addition, the system disclosed in the present invention can perform local breakouts to each packet according to each packet's destination on different terminal equipments. If a packet's destination is at the internal enterprise's network, this packet can pass through the tunnel connection. Otherwise, it can be directly connected to the internet at the access point. Therefore, the problem when all packets pass through the tunnel connection and result in a bandwidth jam of the tunnel connection can be avoided.

In accordance with one embodiment of the present disclosure, a remote network connection system is disclosed. The remote network connection system includes a gateway, a mobile office access equipment and a terminal equipment. The gateway is connected in an enterprise network, and connected to an internet. The mobile office access equipment is connected to the gateway through the internet. The terminal equipment is connected to the internet through the mobile office access equipment, and transmits a packet having a destination address toward the gateway. The breakout unit is arranged in the mobile office access equipment, and alternatively forms a public connection to obtain an internet service directly through the internet and forms a tunnel connection with the gateway based on the destination address of the packet.

In accordance with one embodiment of the present disclosure, a method of connecting a mobile office and a destination office through a tunnel connection is disclosed, wherein the destination office has a gateway, the mobile office uses a public network and produces a plurality of packets, and the method includes steps of providing an access equipment for the mobile office; causing the access equipment to be connected to the gateway; establishing a breakout rule for the plurality of packets, wherein the plurality of packets have a first packet and a second packet, and each of the plurality of packets has a destination address; and alternatively causing the first packet to use the public network to form a public connection, and causing the second packet to use the public network to form the tunnel connection according to the breakout rule.

In accordance with a further embodiment of the present disclosure, an access equipment for a mobile office includes an NAT (network address translation) unit, a router unit, a tunnel unit, a bridge unit and a local breakout unit. The router unit is connected to the NAT, the tunnel unit is connected to the router unit, the bridge unit is connected to the router unit and the tunnel unit. The local breakout unit is connected to the bridge unit, and determines whether a packet is to be alternatively transmitted to an internet, from the bridge unit, through the tunnel unit to the router unit to form a tunnel connection, and transmitted to the internet from the bridge unit, through the router unit to the NAT unit to form a public connection based on a destination address of the packet.

The above embodiments and advantages of the present invention will become more readily apparent to those ordinarily skilled in the art after reviewing the following detailed descriptions and accompanying drawings.
Fig. 1 is a diagram showing an application system according to the preferred embodiment of the present disclosure;
Fig. 2 is a diagram showing a connection flow according to the preferred embodiment of the present disclosure;
Fig. 3(A) is a diagram showing a connection flow when the terminal equipment is applied in the present invention according to the preferred embodiment of the present disclosure;
Fig. 3(B) is a diagram showing a connection flow when the terminal equipment is applied in the present invention according to the preferred embodiment of the present disclosure;
Fig. 4 is a diagram showing a packet information flow for a destination inside an internal enterprise network according to the preferred embodiment of the present disclosure; and
Fig. 5 is a diagram showing a packet information flow for a destination outside the internal enterprise network according to the preferred embodiment of the present disclosure.

Please refer to all Figs. of the present invention when reading the following detailed description, wherein all Figs. of the present invention demonstrate different embodiments of the present invention by showing examples, and help the skilled person in the art to understand how to implement the present invention. The present examples provide sufficient embodiments to demonstrate the spirit of the present invention, each embodiment does not conflict with the others, and new embodiments can be implemented through an arbitrary combination thereof, i.e., the present invention is not restricted to the embodiments disclosed in the present specification.

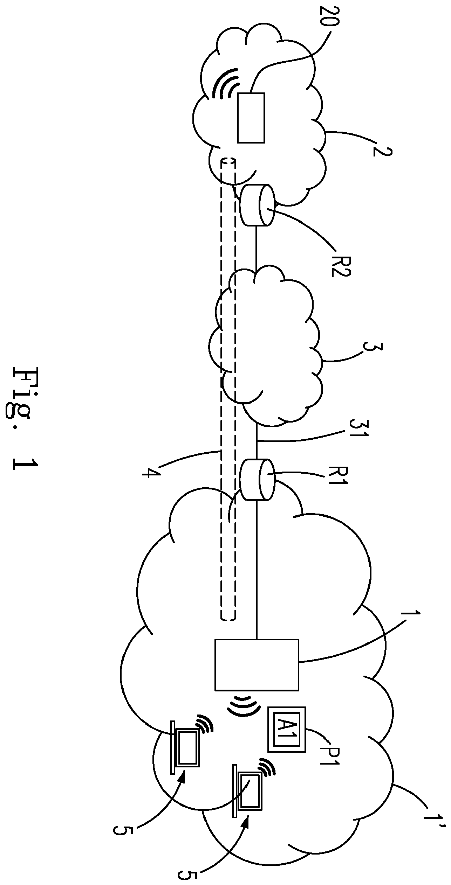

Please refer to Fig. 1, which is a diagram showing an application system according to the preferred embodiment of the present disclosure. The application system disclosed in the present invention is shown from a system view, and is a remote network connection system. The remote network connection system includes a gateway 20, a mobile office access equipment 1 and a terminal equipment 5. The gateway 20 is internally connected with an enterprise network 2 and externally connected to an internet 3 outside the enterprise network 2, wherein the enterprise network 2 can include a server (not shown). The mobile office access equipment 1 is connected to the gateway 20 through the internet 3. The terminal equipment 5 makes a connection and sends a packet to the gateway 20 through the mobile office access equipment 1, wherein the mobile office access equipment 1 determines how the packet should be shunted according a purpose of the packet. Furthermore, if the purpose of the packet is to reach the enterprise network 2 in which the gateway 20 is internally connected to, the packet can be transmitted to the gateway 20 through a tunnel connection 4 by the mobile office access equipment 1. Moreover, if a purpose of another packet is irrelevant to the aforementioned purpose, i.e., the another packet is not intended to enter the server of the enterprise network 2, this packet will be transmitted to the internet 3 through the public connection 31, rather than transmitted to the gateway 20 through the tunnel connection 4. In addition, the terminal equipment 5 includes, but is not limited to, a laptop, a mobile phone, a personal digital assistance (PDA), and so on. The gateway 20 is arranged in an internal enterprise network 2, and the mobile office access equipment 1 and the terminal equipment 5 are arranged in a remote local area network 1'.

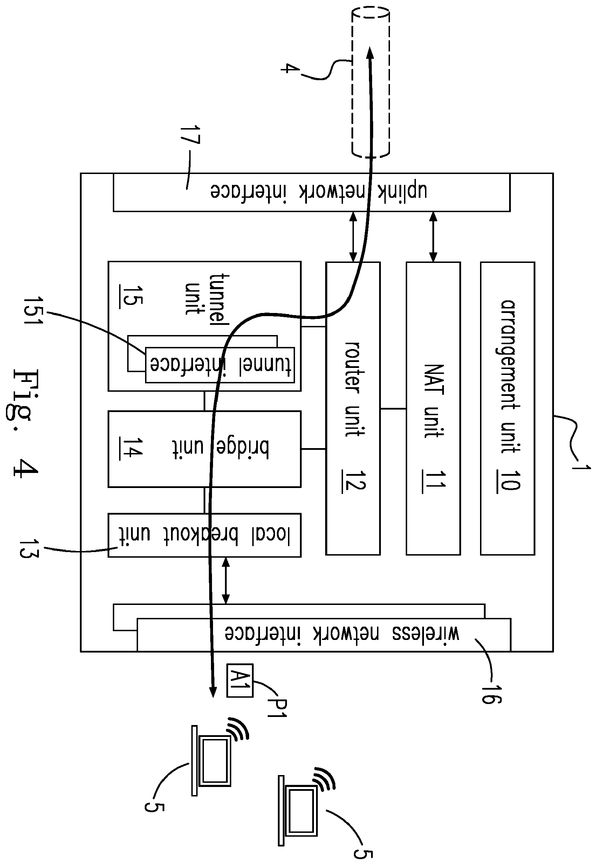

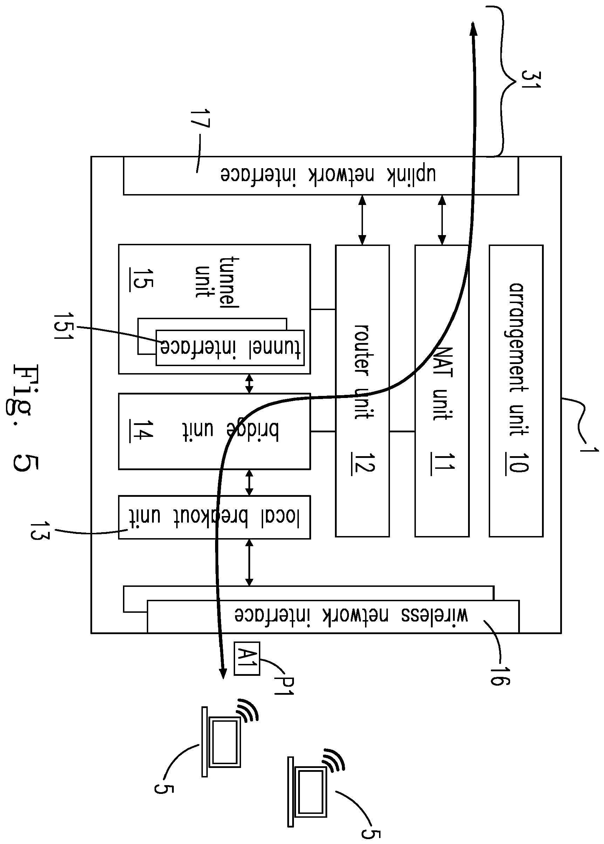

Please refer to Fig. 1, which shows the remote network connection system. The remote network connection system includes a gateway 20, a mobile office access equipment 1, a terminal equipment 5 and a breakout unit (referring to symbol 13 in Fig. 4 and Fig. 5). The gateway 20 is connected to a server (not shown) in an enterprise network 2, and can be further connected to an internet 3. The mobile office access equipment 1 is connected to the gateway 20 through the internet 3. The terminal equipment 5 is connected to the internet 3 through the mobile office access equipment 1. The breakout unit (referring to symbol 13 in Figs. 4 and 5) is arranged in the mobile office access equipment 1, and alternatively making the packet can directly acquire the internet service through the internet 3 or by forming a tunnel connection with the gateway 20 according to the purpose of the packet.

Moreover, the efficacy of the breakout unit 13 in the present invention is that the packet can be inspected and transmitted to the gateway 20 through the tunnel connection 4 by using the mobile office access equipment 1 controlled by the breakout unit 13, if the purpose of the packet is to the enterprise network 2 which the gateway 20 is internally connected to. In addition, if the purpose of the packet is irrelevant to the aforementioned purpose, such as to enter a server of the enterprise network, the packet can be transmitted to the internet 3 through the public connection 31 by the mobile office access equipment 1 controlled by the breakout unit 13, rather than being transmitted through the tunnel connection 4. The purpose of the packet usually indicates, but is not limited to, for example, a destination or an application. In order to simplify the management, the purpose can be represented by a white list or a black list, that is, corresponding to different users, usually including the belonging department, rank and categories of the employees, different databases of the internal enterprise network are accessible to the specific individuals.

Thus, when a purpose of a packet meets contents of the white list, the packet will be transmitted to the gateway 20 through the tunnel connection 4 (it usually means the purpose of the packet is to enter the enterprise network 2). As to the environment of the mobile office access equipment 1, there is a first router R1 therein connected to the internet 3. As to the environment of the enterprise network 2 where the gateway 20 is internally connected to, there is a second router R2 therein connected to the internet 3. In addition, the mobile office access equipment 1 in the present invention can be one of a MiFi® device, a mobile phone or a computer having two communication interface units.

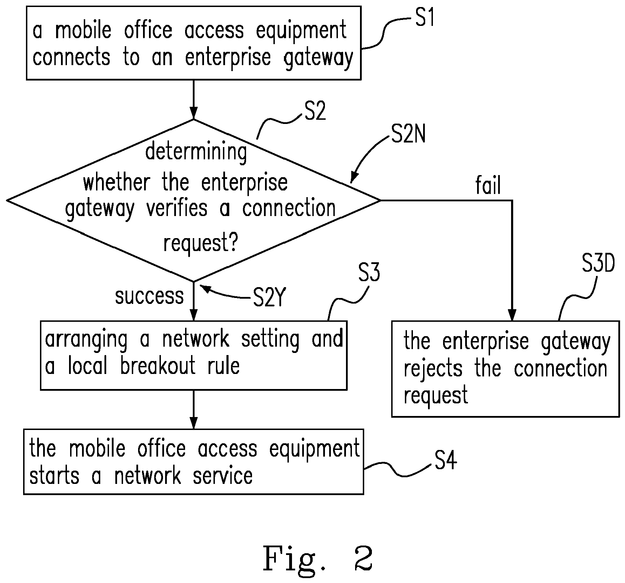

Please refer to Fig. 2 in conjunction with Fig.1, wherein Fig.2 shows a connection flow chart according to the preferred embodiment of the present disclosure. Fig. 2 discloses a method according to a preferred embodiment of the present disclosure, which is a network connection method in a remote site. The method includes the following steps. In Step S1, a mobile office access equipment 1 provides a request for a connection to an enterprise gateway 20. The subsequent step is Step S2. In Step S2, determine if the verification form the gateway 20 for the aforementioned request is succeeded. If the verification for the connection request fails as the Step S2N, the next step is Step S3D. In Step S3D, the enterprise gateway 20 rejects the connection. If a result of the verification in Step 2 is succeeded as Step S2Y, the next step is Step S3. In Step S3, the enterprise gateway 20 arranges a network setting and a local breakout rule, wherein arranging the networking setting means that the mobile office access equipment 1 is arranged as if it uses an access point in an enterprise network 2. As to arranging the breakout rule, it is usual but not limited to mean to import the white or the black list of the breakout rule into the mobile office access equipment 1 (corresponding to a network multiplex device). Configuration data of the network setting and the breakout rule can be stored into the arrangement unit 10 (please refer to Figs. 4 and 5) in advance, or the network setting and the breakout rule can be dynamically arranged when the enterprise gateway 20 and the mobile office access equipment 1 are connected. After Step S3 is Step S4. In Step S4, the mobile office access equipment 1 starts a network service, i.e., it starts to provide the terminal equipment 5 with a network service.

Since wireless communication technique is very mature and widespread, in most circumstances, the mobile portable electronic equipment used by users connects to the wireless access point, and thus it is a reasonable arrangement if the enterprise gateway 20 is a wireless access controller. Similarly, the network setting in Step S3 is usually a wireless network setting, so as to be applied to laptops, notebooks etc. If combined with hardware to demonstrate the aforementioned method, the present invention provides a method that allows a mobile office 1' (i.e., the remote local network 1' in Fig. 1) used by a user connects to a target office 2 (i.e., the enterprise network 2) through a tunnel connection 4 (referring to Fig. 1), wherein the target office 2 has a gateway 20, the mobile office 1' can use a public network 3 (i.e., the internet 3 in Fig. 1), and the user generates a plurality of packets (not shown) in the mobile office 1'. The method includes: provide an access equipment 1 (i.e., the mobile office access equipment 1 in Fig. 1) for the mobile office 1'; makes the access equipment 1 connect to the gateway 20; establishing a breakout rule for the plurality of packets, wherein the plurality of packets includes a first packet and a second packet; and alternatively makes the first packet to use the public network 3, and makes the second packet to use the tunnel connection 4 according to the breakout rule, so as to make the mobile office 1' acquire an enterprise network service.

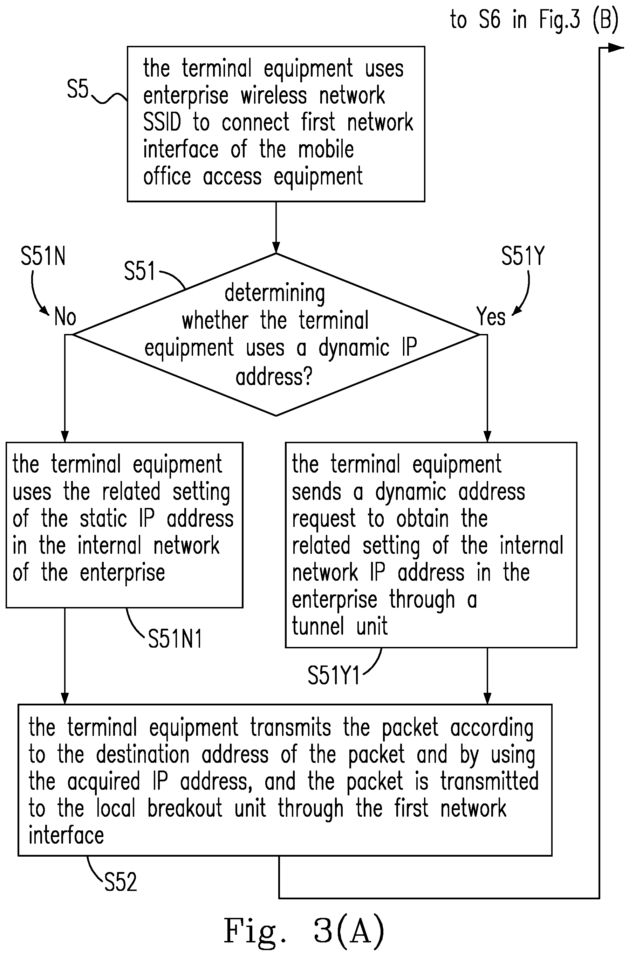

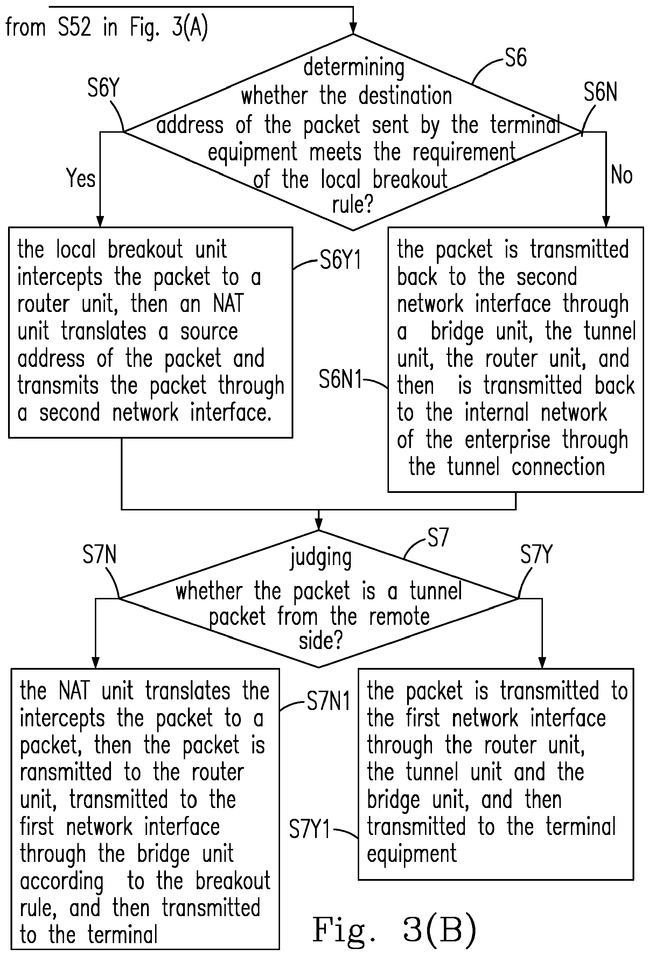

Please refer to Fig. 3(A) and Fig. 3(B) in conjunction with Fig.4 and Fig.5; wherein Fig. 3(A) and Fig. 3(B) show a connection flow of the terminal equipment 5 according to a preferred embodiment of the present disclosure. Fig. 4 shows a diagram of a packet information stream of the packet of the enterprise network 2 according to the preferred embodiment of the present disclosure. Fig. 5 shows a diagram of a packet information stream of the packet which is not of the enterprise network 2 according to a preferred embodiment of the present disclosure. Please refer to Figs. 3(A) and 3(B), in order to clearly show the aforementioned connection method and the efficacy resulting from the system, the subsequent steps are described as follows. In Step S5, the terminal equipment 5 uses an enterprise wireless network service set identifier (SSID) to connect to a first network interface 16 (Figs. 4 and 5) of the mobile office access equipment 1. Accordingly, it is known that the terminal equipment 5 (Fig. 1) has regarded the access equipment 1 as a wireless network access unit disposed in the enterprise network 2, and has acquired the enterprise wireless network SSID. In other words, the terminal equipment 5 is regarded as in headquarters of the enterprise or in a branch office of the enterprise, rather than in a remote site.

After Step S5, the subsequent Step S51 is related to obtain an IP address. In Step S51, determine if the terminal equipment 5 uses a dynamic IP address. If not, as shown in Step S51N, i.e., not using the dynamic IP address, the next step is Step S51N1. In Step S51N1, the terminal equipment 5 uses the related setting of the static IP address in the enterprise network 2. If yes in Step S51, as shown in Step S51Y, i.e., using the dynamic IP address, the next step is Step S51Y1. In Step S51Y1, the terminal equipment 5 sends a dynamic address request to obtain the related setting of the internal enterprise network IP address through the tunnel unit 15 (Figs. 4 and 5). The above Steps S51, S51N1, and S51Y1 show that in the present invention both the dynamic IP address or the static IP address are applicable. The step after the terminal equipment 5 acquires the IP address is Step S52. In Step S52, the terminal equipment 5 using the acquired IP address to transmit the packet according to the purpose of the packet, and the packet is transmitted to the local breakout unit 13 through the first network interface 16. Additionally, in the process of Step S52, an inquiry of address resolution protocol (ARP) can be processed by the local breakout unit 13, which can be an agent for replying to the inquiry, hence speeding up the flow and reducing the loading of the tunnel unit 15 during processing the packet.

Next, it is one of the key points of the present invention, i.e., the local breakout rule is related to the purpose of the packet. In Step S6, determine if the purpose of the packet transmitted by the terminal equipment 5 meets the requirement of the local breakout rule. It is noted that herein meeting the requirement of the local breakout rule indicates the packet will be shunted at the place where the mobile office access equipment 1 is located, and the packet does not need to enter the tunnel connection 4. When the result in Step S6 is yes, as shown in Step S6Y, the local breakout unit 13 intercepts the packet and transmit it to a router unit 12, so that an NAT unit 11 translates a source address of the packet and then transmits the packet through a second network interface 17 (Fig. 5). At this time the terminal equipment 5 is usually connected to the public connection 31. However, when the result in Step S6 is Step S6N, the purpose of the packet does not meet the requirement of the breakout rule (i.e., the packet will be transmitted to the enterprise network 2 through the tunnel connection 4), so that the next step is Step S6N1. In Step S6N1, the local breakout unit 13 transmits the packet back to the second network interface 17 through a bridge unit 14, the tunnel unit 15 and the router unit 12 , so that the packet is transmitted back to the enterprise network 2 through the tunnel connection 4 (Fig. 4). The above process to the Step S6 is a decision process to determine whether the packet should be shunted when the terminal equipment 5 transmits the packet to the enterprise network 2, and it generates two results in Steps S6Y1 and S6N1.

Please refer to Figs. 3(A) and 3(B). When the second network interface 17 receives a packet, the mobile office access equipment 1 also needs to perform a judgment on the packet. In Step S7, judging whether the packet is a tunnel packet from the remote side, i.e., judging whether the packet is transmitted back through the tunnel connection 4, and thus two results will be generated. Firstly, when a judged result is negative, as shown in Step S7N, the packet is a non-tunnel packet, and the step after Step S7 is Step S7N1. In Step S7N1, the NAT unit 11 translates the destination address of the packet, then the packet is transmitted to the router unit 12, transmitted to the first network interface 16 through the bridge unit 14 according to the breakout rule, and then transmitted to the terminal equipment 5 (please refer to Fig. 5). When the result is judged positive, as shown in Step S7Y, the packet is a tunnel packet, and the step after Step S7 is Step S7Y1. In Step S7Y1, the packet is transmitted to the first network interface 16 through the router unit 12, the tunnel unit 15 and the bridge unit 14, and then is transmitted to the terminal equipment 5 (please refer to Fig. 4).

Please refer to Fig. 4, which shows an information flow diagram when transmitting a packet to the enterprise network 2 according to the preferred embodiment of the present disclosure. According to Figs. 3(A) and 3(B) and their relevant descriptions, the terminal equipment 5 transmits the packet. For example, if the packet is transmitted from the right side to left side in Fig. 4, the packet can firstly reach the first network interface 16. This network interface 16 is usually a wireless network interface for a plurality of terminal equipment 5 to receive/transmit messages. Subsequently, the packet is transmitted to the local breakout unit 13 to make a decision. When the decision is made that the packet needs to pass through the tunnel connection 4 (i.e., the packet does not go to be in a local divided stream), the packet can be transmitted to the tunnel unit 15 through the bridge unit 14, then transmitted to the router unit 12, and then transmitted to the enterprise network 2 by the second network interface 17 through the tunnel connection 4. Usually, the tunnel unit 15 includes a tunnel interface 151 used to generate a tunnel packet of the packet transmitted in the tunnel connection 4. If the mobile office access equipment 1 receives a packet from the tunnel connection 4, the packet is transmitted back to the terminal equipment 5 according to a reversal of the aforementioned process. The second network interface 17 can be a cable network interface or a wireless network interface.

Please refer to Fig. 5, which shows an information flow diagram when a packet is not transmitted to the enterprise network 2 according to the preferred embodiment of the present disclosure. According to Figs. 3(A) and 3(B) and their relevant descriptions, the terminal equipment 5 transmits the packet. For example, if the packet is transmitted from the right side to the left side of Fig. 5, the packet can first reach the first network interface 16. This network interface 16 is usually a wireless network interface for a plurality of terminal equipment 5 to receive/transmit messages. Subsequently, the packet is transmitted to the local breakout unit 13 to make a decision. When the decision is made that the packet does not need to pass through the tunnel connection 4 (i.e., the packet will go to be in a local divided stream), the packet can be transmitted to the router unit 12 through the bridge unit 14, then transmitted to the NAT unit 11, and then transmitted to the public connection 31 through the second network interface 17. If the mobile office access equipment 1 receives a packet from the public connection 31, the packet is transmitted back to the terminal equipment 5 according to a reversal of the aforementioned process. The second network interface 17 can be a cable network interface or a wireless network interface.

Please refer to Figs. 3(A), 3(B), 4 and 5 and the relevant descriptions, a route and direction decision process of the packet disclosed in the present invention is performed in the local breakout unit 13 according to the local breakout rule. In Figs. 3(A), 3(B), 4 and 5, a mobile office access equipment 1 is disclosed according to the preferred embodiment of the present disclosure, and includes an NAT unit 11, a router unit 12, a tunnel unit 15, a bridge unit 14 and a local breakout unit 13. The router unit 12 is connected to the NAT unit 11. The tunnel unit 15 is connected to the router unit 12. The bridge unit 14 is connected to the router unit 14 and the tunnel unit 15. The local breakout unit 13 is connected to the bridge unit 14, and decides whether the packet should depart from the bridge unit 14 to the router unit 12 through the tunnel unit 15 according to a purpose with which the packet is generated, or depart from the bridge unit 14 to the NAT unit 11 through the router unit 12 and is then transmitted to the public connection 31 (shown in Fig. 5). The wireless downlink interface 16 is connected to the local breakout unit 13, and the local breakout unit 13 is connected to a terminal equipment 5 through the wireless downlink interface 16. The uplink interface 17 is connected to the router unit 12 and the NAT unit 11, makes the packet to acquire the internet service through the uplink interface 17. In addition, the mobile office access equipment 1 can further include an arrangement unit 10 connected with each unit therein for arranging corresponding function of each unit.

Overall, a remote network connection system, an access equipment and a connecting method thereof are disclosed in the present invention. The purpose of the invention is described in the aforementioned paragraphs, and is to minimize building costs of the mobile office to be as low as possible. A hardware unit (such as the mobile office access equipment 1) having two or more network interfaces is provided, and after easily setting up the hardware unit, it can serve as a wireless access point as if used in the enterprise network. The settings contents of the access equipment is listed as follows, i.e., such as ID code of the access equipment, tunnel connection settings, the local breakout rule, user account and password and so on. Basically, if these settings are complete, the building of the remote office or the mobile office is complete. These settings are easier than VPN settings in the prior art. The register process of the access equipment is also simple. At first, the mobile office access equipment is connected to the internet. Afterward, a user inputs the address of the enterprise gateway 20 into the user interface unit of the access equipment. Afterward, the access equipment transmits a management request to the enterprise gateway, Afterward, the enterprise gateway 20 manages the access equipment. Later on, the enterprise gateway 20 sets up the access equipment, such as a wireless network address (e.g. a service set identifier (SSID)) which the access equipment need to use, and the local breakout rule used by each wireless network (remote area network, i.e., wireless network where the mobile office is located). In addition, regarding the management as described above, the user can input MAC address or ID code of the mobile office access equipment into the enterprise gateway 20 directly, in order to perform the management.

Moreover, the mobile office access equipment 1 can be a MiFi® device, a mobile phone, or a computer having two communication interfaces. If the mobile office access equipment is a mobile phone (it is usually a smart phone, but is not limited to) or a computer having two communication interfaces (it is usually a laptop, but is not limited to), an application installed therein can make the abovementioned devices to have functions described in each Figure and description Because the smart phone and the laptop are indispensible devices whenever a traveler takes a business trip or a pleasure trip, to install the application software into both devices can prevent the demand to carry an additional access device, and can also reduce the traveler's baggage load. If a business traveler uses the access equipment according to the preferred embodiment of the present disclosure, the additional software is not necessary to install on the smart phone or the laptop of the business traveler; however, the additional software needs to be installed on both devices when using the VPN technology in the prior art. If the present invention is integrated with voice IP (VoIP), it can be applied to transfer a telephone session. According to the aforementioned Figs. and descriptions, the present invention extends the access point in the enterprise network to form a virtual internal network. The virtual internal network is very convenient for the employee working in a remote office because the setting of the terminal equipment is the same as used in the enterprise, there is no need for an additional setting.

Furthermore, because the access device equals to the wireless network access point in the enterprise network, a plurality of access devices in the invention can be prepared for an enterprise, a business unit or a party, and are installed and configured to complete in advance, and all the same configurations can be used Because account of each employee is different from each other and each account has its own access authority, the region in the enterprise network where a tunnel packet can access is not always the same. For management information system (MIS)/information technology (IT) members in the enterprise, the present invention can be integrated together with a wireless local area network (WLAN) management in the office, and an additional VPN server is not necessary. By using the system, the device and the method disclosed in the present invention, a remote office can be achieved easily, the cost is low, the operation is simple, and there are no complex configurations, thus the efficacy increases accordingly, and therefore the present invention is beneficial to the remote office, the mobile office, and the application and popularization of office at home.
1. A remote network connection system, comprising: a gateway (20) connected in an enterprise network (2) and connected to an internet (3); a mobile office access equipment (1) connected to the gateway (20) through the internet (3); a terminal equipment (5) connected to the internet (3) through the mobile office access equipment (1); and a breakout unit (13) arranged in the mobile office access equipment (1), and alternatively forming a public connection (31) to obtain an internet service directly through the internet (3), or forming a tunnel connection (4) with the gateway (20) based on a purpose with which a packet is generated.
2. The system in Embodiment 1, characterized in that the breakout unit (13) determines a shunt of the packet based on one of a white list and a black list associated with the purpose of the packet.
3. The system of any one of Embodiments 1-2, characterized in that the shunt of the packet is performed in the mobile office access equipment (1).
4. The system of any one of Embodiments 1-3, characterized in that the mobile office access equipment (1) is one selected from a group consisting of a MiFi® device, a mobile phone and a computer having two communication interfaces (16, 17).
5. The system of any one of Embodiments 1-4, characterized in that the gateway (20) is arranged in the enterprise network (2).
6. The system of any one of Embodiments 1-5, characterized in that the gateway (20) has a first connection in the enterprise network (2) and a second connection connected to the internet (3).
7. The system of any one of Embodiments 1-6, characterized in that the terminal equipment (5) transmits the packet to the breakout unit (13), a purpose of the packet is inspected by the breakout unit (13), and the packet is transmitted to the gateway (20) by the tunnel connection (4) when the purpose of the packet indicates a destination belonging to the enterprise network (2).
8. The system of any one of Embodiment 1-7, characterized in that the terminal equipment (5) transmits the packet to the breakout unit (13), a purpose of the packet is inspected by the breakout unit (13), and the packet is transmitted through the public connection (31) when the purpose of the packet indicates a destination being irrelevant to the enterprise network (2).
9. A method of connecting a mobile office (1') of an user equipment (5) and a target office (2) through a tunnel connection (4), characterized in that the target office (2) has a gateway (20), the mobile office (1') uses a public network (3) and the user equipment (5) produces a plurality of packets, and the method comprises steps of: providing an access equipment (1) for the mobile office (1'); connecting the access equipment (1) to the gateway (20); establishing a breakout rule for the plurality of packets, characterized in that the plurality of packets have a first packet and a second packet; and alternatively causing the first packet to use the public network (3) to form a public connection (31), and causing the second packet to use the public network (3) to form the tunnel connection (4) according to the breakout rule, so as to acquire for the mobile office (1') an internet service.
10. The method in Embodiment 9, characterized in that the access equipment (1) is one selected from a group consisting of a MiFi® device, a mobile phone, and a computer having two communication interfaces; when the breakout rule is determined according to a purpose with which the plurality of packets are inputted into a network multiplex device, a specific one of the plurality of packets which conforms with a predetermined purpose enters into the gateway (20), and the predetermined purpose is ruled by one of a white list and a black list; and the breakout rule is determined according to a purpose with which the plurality of packets are inputted into a network multiplex device, if the purpose is for the packets to reach an address within the gateway (20), the plurality of packets are allowed to pass the gateway (20).
11. The method of any one of Embodiments 9-10, further characterized by comprising steps of: providing for the mobile office (1') a request for a connection to the gateway (20) through the access equipment (1); performing by the gateway (20) a verification upon the request provided from the mobile office (1'); arranging for the gateway network (20) settings and importing the breakout rule into the access equipment (1) when the request passes the verification; and starting by the access equipment (1) an internet service for the mobile office (1').
12. The method of any one of Embodiments 9-11, further characterized by comprising steps of: using an enterprise network SSID (Service Set Identifier) to connect the mobile office (1') to a first network interface (16) of the access equipment (1); and one of the following steps: directly transmitting by the mobile office (1') a dynamic IP address request to obtain a first configuration related to an enterprise IP address; and directly using for the mobile office (1') a second configuration of a static IP address in an internal enterprise network.
13. The method of any one of Embodiments 9-12, further characterized by comprising steps of: determining how the destination address of each of the plurality of packets meets the breakout rule; and one of the following steps: directly intercepting each of the plurality of packets by a breakout unit (13) when the destination of each packet meets a first connection of the breakout rule, transmitting the each packet from the breakout unit (13) to a router unit (12), transforming a source address of the each packet from the router unit (12) by an NAT (Network Address Translation) unit (11), transmitting the each packet from the NAT unit (11) to a second network interface (17), and transmitting the each packet from the second network interface (17); and directly having each of the plurality of packets transmitted to the second network interface (17) through a bridge unit (14), a tunnel unit (15) and the router unit (12) back to an internal enterprise network when the each packet meets a second connection of the breakout rule.
14. The method of any one of Embodiments 9-13, further characterized by comprising steps of: judging whether each of the plurality of packets returning to the access equipment (1) is a tunnel-encapsulated packet; transmitting the each packet to the mobile office (1') through a router unit (12), a tunnel unit (15) and a bridge unit (14) to the mobile office (1') when the each packet returning to the access equipment (1) is the tunnel-encapsulated packet; and transmitting the each packet to the mobile office (1') through an NAT (network address translation) unit (11), a router unit (12) and a bridge unit (14) to the mobile office (1') when the each packet returning to the access equipment (1) is not the tunnel-encapsulated packet.
15. The method of any one of Embodiments 9-14, further characterized in that: the user equipment (5) transmits each packet to the breakout unit (13), a purpose of each packet is inspected by the breakout unit (13), and each packet is transmitted to the gateway (20) by the tunnel connection (4) when the purpose of each packet indicates a destination belonging to an enterprise network; and the user equipment (5) transmits each packet to the breakout unit (13), a purpose of each packet is inspected by the breakout unit (13), and each packet is transmitted through the public connection (3) when the purpose of each packet indicates a destination being irrelevant to the enterprise network.

## Claims

1. A remote network connection system, comprising:
a gateway (20) connected in an enterprise network (2) and connected to an internet (3);
a mobile office access equipment (1) connected to the gateway (20) through the internet (3);
a terminal equipment (5) connected to the internet (3) through the mobile office access equipment (1); and
a breakout unit (13) arranged in the mobile office access equipment (1), and alternatively forming a public connection (31) to obtain an internet service directly through the internet (3), or forming a tunnel connection (4) with the gateway (20) based on a purpose with which a packet is generated.

2. The system as claimed in Claim 1, **characterized in that** the breakout unit (13) determines a shunt of the packet based on one of a white list and a black list associated with the purpose of the packet.

3. The system as claimed in either one of Claims 1-2, **characterized in that** the shunt of the packet is performed in the mobile office access equipment (1).

4. The system as claimed in anyone of Claims 1-3, **characterized in that** the mobile office access equipment (1) is one selected from a group consisting of a MiFi® device, a mobile phone and a computer having two communication interfaces (16, 17).

5. The system as claimed in anyone of Claims 1-4, **characterized in that** the gateway (20) is arranged in the enterprise network (2).

6. The system as claimed in anyone of Claims 1-5, **characterized in that** the gateway (20) has a first connection in the enterprise network (2) and a second connection connected to the internet (3).

7. The system as claimed in anyone of Claims 1-6, **characterized in that** the terminal equipment (5) transmits the packet to the breakout unit (13), a purpose of the packet is inspected by the breakout unit (13), and the packet is transmitted to the gateway (20) by the tunnel connection (4) when the purpose of the packet indicates a destination belonging to the enterprise network (2).

8. The system as claimed in anyone of Claims 1-7, **characterized in that** the terminal equipment (5) transmits the packet to the breakout unit (13), a purpose of the packet is inspected by the breakout unit (13), and the packet is transmitted through the public connection (31) when the purpose of the packet indicates a destination being irrelevant to the enterprise network (2).

9. A method of connecting a mobile office (1') of a user equipment (5) and a target office (2) through a tunnel connection (4), **characterized in that** the target office has a gateway (20), the mobile office (1') uses a public network (3), the user equipment (5) produces a plurality of packets, and the method is **characterized by** comprising steps of:
providing an access equipment (1) for the mobile office (1');
connecting the access equipment (1) to the gateway (20);
establishing a breakout rule for the plurality of packets, **characterized in that** the plurality of packets have a first packet and a second packet; and
alternatively causing the first packet to use the public network (3) to form a public connection (31), and causing the second packet to use the public network (3) to form the tunnel connection (4) according to the breakout rule, so as to acquire for the mobile office (1') an internet service.

10. The method as claimed in Claim 9, further **characterized in that**:
the access equipment (1) is one selected from a group consisting of a MiFi® device, a mobile phone, and a computer having two communication interfaces;
when the breakout rule is determined according to a purpose with which the plurality of packets are inputted into a network multiplex device, a specific one of the plurality of packets which conforms with a predetermined purpose enters into the gateway (20), and the predetermined purpose is ruled by one of a white list and a black list; and
the breakout rule is determined according to a purpose with which the plurality of packets are inputted into a network multiplex device, if the purpose is for the packets to reach an address within the gateway (20), the plurality of packets are allowed to pass the gateway (20).

11. The method as claimed in either one of Claims 9-10, further **characterized by** comprising steps of:
providing for the mobile office (1') a request for a connection to the gateway (20) through the access equipment (1);
performing by the gateway (20) a verification upon the request provided from the mobile office (1');
arranging for the gateway network (20) settings and importing the breakout rule into the access equipment (1) when the request passes the verification; and
starting by the access equipment (1) an internet service for the mobile office (1').

12. The method as claimed in anyone of Claims 9-11, further **characterized by** comprising steps of:
using an enterprise network SSID (Service Set Identifier) to connect the mobile office (1') to a first network interface (16) of the access equipment (1); and
one of the following steps:
directly transmitting by the mobile office (1') a dynamic IP address request to obtain a first configuration related to an enterprise IP address; and
directly using for the mobile office (1') a second configuration of a static IP address in an internal enterprise network.

13. The method as claimed in anyone of Claims 9-12, further **characterized by** comprising steps of:
determining how the destination address of each of the plurality of packets meets the breakout rule; and
one of the following steps:
directly intercepting each of the plurality of packets by a breakout unit (13) when the destination of each packet meets a first connection of the breakout rule, transmitting the each packet from the breakout unit (13) to a router unit (12), transforming a source address of the each packet from the router unit (12) by an NAT (Network Address Translation) unit (11), transmitting the each packet from the NAT unit (11) to a second network interface (17), and transmitting the each packet from the second network interface (17); and
directly having each of the plurality of packets transmitted to the second network interface (17) through a bridge unit (14), a tunnel unit (15) and the router unit (12) back to an internal enterprise network when the each packet meets a second connection of the breakout rule.

14. The method as claimed in anyone of Claims 9-13, further **characterized by** comprising steps of:
judging whether each of the plurality of packets returning to the access equipment (1) is a tunnel-encapsulated packet;
transmitting the each packet to the mobile office (1') through a router unit (12), a tunnel unit (15) and a bridge unit (14) to the mobile office (1') when the each packet returning to the access equipment (1) is the tunnel-encapsulated packet; and
transmitting the each packet to the mobile office (1') through an NAT (network address translation) unit (11), a router unit (12) and a bridge unit (14) to the mobile office (1') when the each packet returning to the access equipment (1) is not the tunnel-encapsulated packet.

15. The method as claimed in anyone of Claims 9-14, further **characterized in that**:
the user equipment (5) transmits each packet to the breakout unit (13), a purpose of each packet is inspected by the breakout unit (13), and each packet is transmitted to the gateway (20) by the tunnel connection (4) when the purpose of each packet indicates a destination belonging to an enterprise network; and
the user equipment (5) transmits each packet to the breakout unit (13), a purpose of each packet is inspected by the breakout unit (13), and each packet is transmitted through the public connection (3) when the purpose of each packet indicates a destination being irrelevant to the enterprise network.
